# EUROPEAN PATENT SPECIFICATION

(11) **EP 4 255 108 B1**
(45) Date of publication and mention of the grant of the patent: **22.07.2026**
(21) Application number: 23162522.9
(22) Date of filing: 17.03.2023
(51) Int. Cl.: H05B 3/26, A24F 40/10, A24F 40/42, A24F 40/46, C04B 35/64, C04B 38/00

(54) **ELECTRONIC VAPORIZATION DEVICE AND VAPORIZATION CORE THEREOF**
ELEKTRONISCHE VERDAMPFUNGSVORRICHTUNG UND VERDAMPFUNGSKERN DAFÜR
DISPOSITIF DE VAPORISATION ÉLECTRONIQUE ET SON NOYAU DE VAPORISATION

(30) Priority: 31.03.2022 CN 202210336206
(43) Date of publication of application: 04.10.2023
(73) Proprietor: Hainan Moore Brothers Technology Co., Ltd., Hainan 571900 (CN)
(72) Inventor: LI, Bo, Hainan, 571900 (CN); ZHANG, Yaohua, Hainan, 571900 (CN); CHEN, Feng, Hainan, 571900 (CN); LONG, Jicai, Hainan, 571900 (CN); CHEN, Fei, Hainan, 571900 (CN); ZHOU, Hongming, Hainan, 571900 (CN)
(74) Representative: Westphal, Mussgnug & Partner, Patentanwälte mbB

(56) References cited:
- EP-A1- 3 615 114
- WO-A1-2019/137099
- US-A- 4 777 153
- US-A1- 2019 098 935
- US-A1- 2022 070 978

## Description

### FIELD

The present invention relates to the field of electronic vaporization, and more specifically, to an electronic vaporization device and a vaporization core thereof.

### BACKGROUND

An electronic vaporization device in the related technology usually includes a liquid storage cavity for accommodating a liquid aerosol-generation substrate and a vaporization core in connection with the liquid storage cavity in a liquid guiding manner. An energized vaporization core can generate heat to heat and vaporize the liquid aerosol-generation substrate, to form an aerosol. The vaporization core is a core component of the electronic vaporization device, and in the related technologies, most of the vaporization cores use a porous ceramic vaporization core, including a porous body and a heating film combined with a surface of the porous body. However, heat and mass transfer efficiency of the vaporization core in the related technologies is low, and it is likely to have a defect of e-liquid explosion.

Publications WO 2019/137099 A1, US 2022/070978 A1, US 4 777 153 A, EP 3 615 114 A1 and US 2019/098935 A1 are considered to be relevant to the present application.

### SUMMARY

The technical problem to be resolved in the present invention is to provide an improved electronic vaporization device and a vaporization core thereof. This problem is solved by a vaporization core having the features of claim 1 and an electronic vaporization device having the features of claim 15.

To resolve the foregoing technology problems, the present invention provides a vaporization core for an electronic vaporization device, including a porous body and a heating film arranged on a surface of the porous body, wherein the porous body includes at least two unit layers, the at least two unit layers include a liquid storage advantage layer and a liquid locking advantage layer combined with the liquid storage advantage layer, and the heating film is combined with a surface of the liquid locking advantage layer and at least partially infiltrates in the liquid locking advantage layer.

According to the invention, the porous body includes a first surface and a second surface opposite the first surface, and the liquid storage advantage layers and the liquid locking advantage layers of the at least two unit layers are alternately stacked together along the direction from the first surface to the second surface. Further, the liquid storage advantage layer has a higher porosity that is higher than a porosity of the liquid locking advantage layer and/or the liquid storage advantage layer has a pore size that is larger than a pore size of the liquid locking advantage layer. In some embodiments, the at least one unit layer includes at least two unit layers that are sequentially arranged along the direction from the first surface to the second surface, one unit layer of the at least two unit layers includes at least the liquid locking advantage layer, and each other unit layer of the at least two unit layers includes the liquid storage advantage layer and the liquid locking advantage layer combined with the liquid storage advantage layer; and the heating film is combined with a surface of the outermost liquid locking advantage layer of the at least two unit layers.

In some embodiments, each of the at least two unit layers includes the liquid storage advantage layer and the liquid locking advantage layer combined with the liquid storage advantage layer, and the liquid storage advantage layers and the liquid locking advantage layers of the at least two unit layers are stacked together along the direction from the first surface to the second surface.

In some embodiments, the thickness of the liquid locking advantage layer ranges from 10 µm to 200 µm. In some embodiments, the thickness of the porous body ranges from 0.8 mm to 3.0 mm.

In some embodiments, the average porosity of the porous body ranges from 50% to 75%. In some embodiments, the thickness of each unit layer ranges from 0.1 mm to 1.5 mm.

In some embodiments, the liquid storage advantage layer includes a large-pore-size structure layer, the liquid locking advantage layer includes a small-pore-size structure layer, and the average pore size of the large-pore-size structure layer is 1.5 to 2.5 times of the average pore size of the small-pore-size structure layer.

In some embodiments, the liquid storage advantage layer includes a large-pore-size structure layer, the liquid locking advantage layer includes a small-pore-size structure layer, the average pore size of the large-pore-size structure layer ranges from 50 µm to 150 µm, and the average pore size of the small-pore-size structure layer ranges from 20 µm to 100 µm.

In some embodiments, the liquid storage advantage layer includes a high porosity layer, the liquid locking advantage layer includes a low porosity layer, and the porosity of the high porosity layer is 1.2 to 2 times of the porosity of the low porosity layer.

In some embodiments, the liquid storage advantage layer includes a high porosity layer, the liquid locking advantage layer includes a low porosity layer, the porosity of the high porosity layer ranges from 55% to 90%, and the porosity of the low porosity layer ranges from 45% to 70%.

In some embodiments, the porous body may be porous alumina ceramic, porous silicon oxide, porous cordierite, porous silicon carbide, porous silicon nitride, porous mullite, or composite porous ceramic formed integrally.

In some embodiments, the heating film is a porous heating film.

In some embodiments, the thickness of the heating film ranges from 15 µm to 150 µm or from 1 µm to 5 µm. In some embodiments, the infiltration ratio of the heating film is less than 60%.

An electronic vaporization device is further provided, including the vaporization core according to any one of the foregoing.

Beneficial effects of the present invention are as follows: With a combination of the liquid storage advantage layer and the liquid locking advantage layer of the porous body, a steeper gradient drop can be achieved and a stronger heat and mass transfer driving force can be provided; and in addition, the heating film is arranged on the liquid locking advantage layer, to reduce the infiltration ratio and alleviate the defect of e-liquid explosion.

### BRIEF DESCRIPTION OF THE DRAWINGS

The present invention is further described below with reference to the accompanying drawings and embodiments. In the accompanying drawings:
FIG. 1 is a longitudinal cross-sectional view of an electronic vaporization device according to some embodiments of the present invention.
FIG. 2 is a three-dimensional schematic structural diagram of a vaporization core shown in FIG. 1 with a bottom facing upward.
FIG. 3 is a three-dimensional schematic structural diagram of a heating element of a vaporization core shown in FIG. 1.
FIG. 4 is a schematic longitudinal sectional structural view of a vaporization core shown in FIG. 1.
FIG. 5 is an electron microscope diagram of a porous body of a vaporization core shown in FIG. 1.
FIG. 6 is a comparison diagram of liquid guiding test data for a porous body of a vaporization core shown in FIG. 1.
FIG. 7 is an electron microscope diagram of the vaporization core shown in FIG. 1.
FIG. 8 is a schematic longitudinal sectional structural view of a vaporization core according to some other embodiments of the present invention.
FIG. 9 is a schematic longitudinal sectional structural view of a vaporization core according to an examples that are not covered by the claims.
FIG. 10 is an electron microscope diagram of the vaporization core shown in FIG. 9.
FIG. 11 is a schematic longitudinal sectional structural view of a vaporization core according to yet some other examples that are not covered by the claims.

### DETAILED DESCRIPTION

To provide a clearer understanding of the technical features, objectives, and effects of the present invention, specific implementations of the present invention are described in detail with reference to the accompanying drawings.

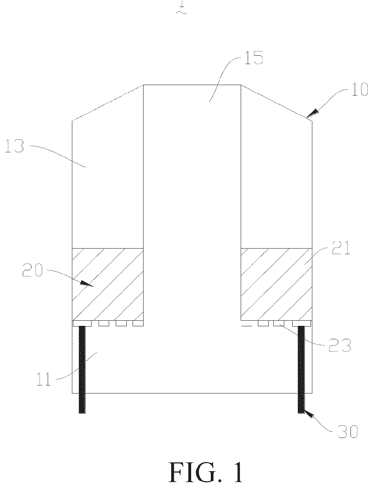

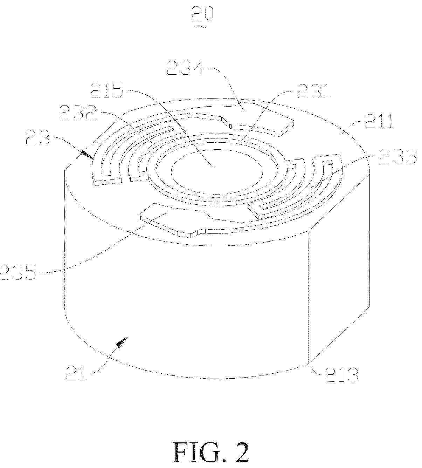

FIG. 1 and FIG. 2 show an electronic vaporization device 1 according to some embodiments of the present invention, and the electronic vaporization device 1 may be configured to heat and vaporize a liquid aerosol-generation substrate for inhalation by a user. In some embodiments, the electronic vaporization device 1 is in a shape of a flat column for convenience of hand holding. In some embodiments, the electronic vaporization device 1 includes a housing 10, a vaporization core 20 and a pair of electrodes 30. The housing 10 is configured to form a vaporization cavity 11, a liquid storage cavity 13, and an air outlet channel 15. The vaporization core 20 is arranged in the housing 10, and configured to heat and vaporize the liquid aerosol-generation substrate. The pair of electrodes 30 is electrically connected to the vaporization core 20, and configured to electronically connect the vaporization core 20 to a battery device (not shown in the figure). It may be understood that the electronic vaporization device 1 is not limited to the shape of a flat column, but may also be in a shape of a cylinder, a square column, or other irregular shapes.

As shown in FIG. 1, in some embodiments, the housing 10 may include a vaporization cavity 11, a liquid storage cavity 13, and an air outlet channel 15. The vaporization cavity 11 is arranged on a bottom end of the housing 10, and configured to accommodate an aerosol and mix the aerosol with ambient air. The air outlet channel 15 is longitudinally arranged in the housing 10 and is in communication with the vaporization cavity 11, and configured to export a mixture of the aerosol and the air. The liquid storage cavity 13 is arranged on an upper part of a vaporization core 12 and surrounds the air outlet channel 15, and configured to accommodate the liquid aerosol-generation substrate. An upper end of the housing 10 may form a flat suction nozzle in communication with the air outlet channel 15 to facilitate inhalation by the user.

As shown in FIG. 2, in some embodiments, the vaporization core 20 may include a porous body 21 and a heating element 23. The porous body 21 is configured to transmit the liquid aerosol-generation substrate in the liquid storage cavity 13 to the heating element 23 by a capillary force. The heating element 23 is arranged on the porous body 21, and configured to generate a high temperature after being energized, to heat and vaporize the liquid aerosol-generation substrate.

In some embodiments, the porous body 21 may be in a shape of a column, which may include a first surface 211, a second surface 213, and a center channel 215. The first surface 211 may be arranged on a bottom end of the porous body 21, and configured to install the heating element 23, to form a vaporization surface. The second surface 213 and the first surface 211 are arranged opposite to each other, and the second surface may be arranged on a top end of the porous body 21, and configured to be in communication with the liquid storage cavity 13 to form a liquid absorbing surface. The center channel 215 is arranged in the porous body 21 and extends from the first surface 211 to the second surface 213, and configured to communicate the vaporization cavity 11 with the air outlet channel 15. It may be understood that, the porous body 21 is not limited to the shape of a column, but may also be in a shape of a flat plate.

In some embodiments, the heating element 23 may be designed in a shape of a circle or a quasi-circle, which is more conducive to a full use of a heating surface. The length of an arc-shaped heating portion may be extended through a surrounding design of the arc-shaped heating portion in a small size, to obtain a higher resistance value. The surrounding design of the arc-shaped heating portion of the heating element 23 may fully gather heat. Combined with the small size brought by the shape of a circle or a quasi-circle, the temperature in the arc-shaped heating portion is further increased to produce more vapor.

In some embodiments, the heating element 23 may include a first heating unit 231, an arc-shaped second heating unit 232, and an arc-shaped third heating unit 233. The first heating unit 231 is arranged on the first surface 211 of the porous body 21 and configured to generate heat in a middle part. The second heating unit 232 and the third heating unit 233 are distributed on two opposite sides of the first heating unit 231 at intervals and symmetrically, and share a circle center with the first heating unit 231 for generating heat on both sides respectively. The second heating unit 232 and the third heating unit 233 are electrically connected to ends on different sides of the first heating unit 231 respectively.

In some embodiments, the vaporization core 20 may be integrally formed by the heating element 23 and the porous body 21 through binder removal and sintering; or the vaporization core may be formed by first preparing the porous body 21 and then preparing the heating element 23 through binder removal and sintering. The shapes of the porous body 21 and the heating element 23 may be not limited.

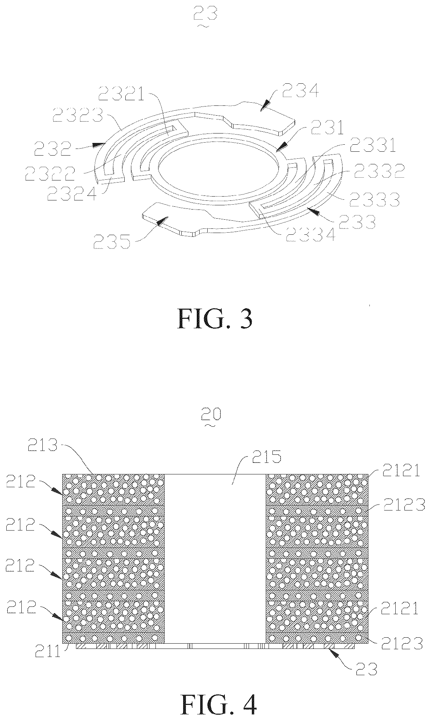

Referring to FIG. 3, in some embodiments, the first heating unit 231 may be in a shape of a circular ring, which may include a center through hole 2310, where the center through hole 2310 is in communication with the center channel 215 of the porous body 21. The center through hole 2310 realizes a direct connection between the vaporization cavity 11 and the suction nozzle. During inhalation, vapor is directly transmitted from the center through hole 2310 to the suction nozzle. An air passage is simple, which can not only alleviate condensation of vapor in the air passage, reduce blockage and leakage, and improve an amount of vapor, but also make vapor enter a mouth of an inhaler directly and quickly, to ensure an inhalation taste.

In some embodiments, the second heating unit 232 may include a first heating portion 2321, a second heating portion 2322, and a third heating portion 2323, which are also roughly arc-shaped. The first heating portion 2321, the second heating portion 2322, and the third heating portion 2323 share a circle center with the first heating unit 231 and are arranged in parallel and at intervals in sequence. It may be understood that the number of arc-shaped heating portions of the second heating unit 232 is not limited to three, but may be two or more than three.

The length of at least one arc-shaped heating portion close to the center through hole 2310 in at least two arc-shaped heating portions of the second heating unit 232 is less than the length of at least one arc-shaped heating portion away from the center through hole 2310. In some implementations, the first heating portion 2321, the second heating portion 2322, and the third heating portion 2323 are sequentially away from the center through hole 2310; and the length of the first heating portion 2321 is less than the length of the second heating portion 2322, and the length of the second heating portion 2322 is less than the length of third heating portion 2323. Sequentially increasing lengths can increase a heating area of the heating portions and further increase the amount of vapor.

In some embodiments, the second heating unit 232 may also include three fourth heating portions 2324 that are roughly strip-shaped, two of the three fourth heating portions 2324 electrically connect the first heating portion 2321, the second heating portion 2322, and the third heating portion 2323 in series in sequence, and two ends of the other of the three fourth heating portions 2324 are respectively electrically connected to the first heating unit 231 and the first heating portion 2321.

In some embodiments, the third heating unit 233 may include a fifth heating portion 2331, a sixth heating portion 2332, and a seventh heating portion 2333, which are also roughly arc-shaped. The fifth heating portion 2331, the sixth heating portion 2332, and the seventh heating portion 2333 share a circle center with the first heating unit 231 and are arranged in parallel and at intervals in sequence. It may be understood that the number of arc-shaped heating portions of the third heating unit 233 is not limited to three, but may be two or more than three.

The length of at least one arc-shaped heating portion close to the center through hole 2310 in at least two arc-shaped heating portions of the third heating unit 233 is less than the length of at least one arc-shaped heating portion away from the center through hole 2310. In some implementations, the fifth heating portion 2331, the sixth heating portion 2332, and the seventh heating portion 2333 are sequentially away from the center through hole 2310; and the length of the fifth heating portion 2331 is less than the length of the sixth heating portion 2332, and the length of the sixth heating portion 2332 is less than the length of seventh heating portion 2333. Sequentially increasing lengths can increase a heating area of the heating portions and further increase the amount of vapor.

In some embodiments, the third heating unit 233 may also include three eighth heating portions 2334 that are roughly strip-shaped, two of the three eighth heating portions 2334 electrically connect the fifth heating portion 2331, the sixth heating portion 2332, and the seventh heating portion 2333 in series in sequence, and two ends of the other of the three eighth heating portions 2334 are respectively electrically connected to the first heating unit 231 and the fifth heating portion 2331.

One end of the other of the three fourth heating portions 2324 and one end of the other of the three eighth heating portions 2334 are respectively connected to two opposite sides of the first heating unit 231, so as to electrically connect the second heating unit 232 and the third heating unit 233 to the first heating unit 231.

As shown in FIG. 2 and FIG. 3, in some embodiments, the heating element 23 may further include a first electrode connecting unit 234 and a second electrode connecting unit 235. The first electrode connecting unit 234 and the second electrode connecting unit 235 are arranged on the other two opposite sides of the first heating unit 231 in parallel and at intervals, connected to the other ends of the third heating portion 2323 and the seventh heating portion 2333 respectively, and configured to be electrically connected to the pair of electrodes 30.

Referring to FIG. 4, in some embodiments, the porous body 21 may include n (2≤n≤30) unit layers 212, and these unit layers 212 are stacked along the direction from the first surface 211 to the second surface 213. Each unit layer 212 may include a liquid storage advantage layer 2121 away from the first surface 211 and a liquid locking advantage layer 2123 close to the first surface 211, so that the liquid storage advantage layer 2121 and the liquid locking advantage layer 2123 of the porous body 21 are alternately arranged, to realize a steeper gradient drop than that of a porous body of the same thickness with a single porosity, so as to provide a stronger heat and mass transfer driving force and provide a faster liquid supplying capability for inhalation.

In some embodiments, the thickness of the porous body 21 (a distance from the first surface 211 to the second surface 213) may range from 0.8 mm to 3.0 mm, and the average porosity thereof may range from 50% to 75%. The thickness of each unit layer 212 may range from 0.10 mm to 1.5 mm, and the thickness of the liquid locking advantage layer 2123 of each unit layer 212 may range from 10 µm to 200 µm.

It may be understood that, in some embodiments, the unit layers 212 of the porous body 21 are not limited to including both the liquid storage advantage layer 2121 and the liquid locking advantage layer 2123, and part of the unit layers 212 may include either the liquid storage advantage layer 2121 or the liquid locking advantage layer 2123.

As shown in FIG. 4, in the embodiments, the liquid storage advantage layer 2121 may be a high porosity layer, and the liquid locking advantage layer 2123 may be a low porosity layer, where the liquid locking advantage layer 2123 provides the porous body 21 with a stronger support and liquid locking function than the liquid storage advantage layer 2121; and the liquid storage advantage layer 2121 provides the porous body 21 with functions such as a larger amount of liquid storage, faster liquid supplying, and stronger heat insulation than the liquid locking advantage layer 2123, so as to reduce a heat loss and provide a higher energy utilization rate for the vaporization core 20.

In some embodiments, the porosity of the liquid storage advantage layer 2121 is 1.2 to 2 times of the porosity of the liquid locking advantage layer 2123. In some embodiments, the porosity of the liquid storage advantage layer 2121 may range from 55% to 90%, and the porosity of the liquid locking advantage layer 2123 may range from 45% to 70%.

In some embodiments, the porous body 21 may be porous alumina ceramic, porous silicon oxide, porous cordierite, porous silicon carbide, porous silicon nitride, porous mullite, or composite porous ceramic formed integrally. It may be understood that the porous body 21 is not limited thereto, and may also be made of other materials suitable for flow casting or coating.

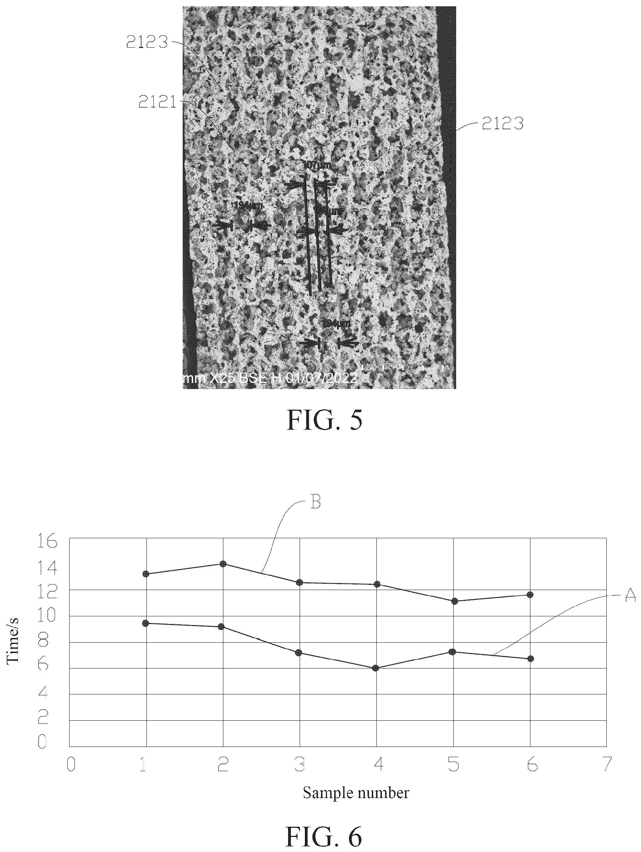

FIG. 5 shows an electron microscope diagram of a porous body 21 according to some embodiments. It may be clearly seen from the figure that the porous body 21 includes a plurality of alternately arranged liquid storage advantage layers 2121 and liquid locking advantage layers 2123, where the thickness of each liquid storage advantage layer 2121 is about 194 µm, and the thickness of each liquid locking advantage layer 2123 is about 20 µm.

FIG. 6 shows a comparison diagram of a rate curve of a liquid guiding test of a porous body 21 with a periodic layered structure and a porous body with a uniform porosity under the condition of the same thickness. In this test, the samples are all rectangular ceramic porous bodies, the test liquid is 30 mg of mung bean ice e-liquid, and the test time is the time when the liquid spreads from a liquid absorbing surface to a vaporization surface of the porous body. As shown in the figure, in different test processes, a liquid guiding rate of the porous body 21 with a periodic multilayer structure (a statistical curve of its liquid guiding rate is A) is significantly better than that of the porous body with a uniform porosity (the statistical curve of its liquid guiding rate is B).

In some embodiments, the porous body 21 may be formed by flow casting or extrusion, and specific examples are as follows:
(1) Flow casting process, the flow casting process itself is suitable for preparing a multilayer structure, and for example: (A) green compacts with different porosities may be flow cast first, and then a periodic layered structure may be prepared by periodically stacking and then co-firing the green compacts; and (B) it is also possible to prepare the periodic layered structure by adjusting a recipe by flowing green compacts with different porosities on the upper and lower sides at once according to the difference in density and particle size of each component in the recipe, thus showing the difference in suspension capabilities in the slurry, and then stacking and co-firing the multilayered green compacts.
(2) Using extrusion molding process, a variety of green compacts with different porosities are extruded by recipe adjustment, and then multilayered green compacts were stacked and co-fired to form the periodic layered structure.
(3) Preparing by combination of a variety of processes, for example, a green compact with a porosity is flow casted first, then a green compact with another porosity is extruded or injection molded, and then a variety of green compacts with different porosities are stacked and co-fired periodically to prepare the periodic layered structure.
(4) Using a coating process, an underlying substrate is a high porosity layer, followed by coating performed on the substrate and secondary sintering to form a surface low porosity layer. According to different porosity requirements, the formulation and molding parameters of the porous substrate material may be adjusted artificially to form a required porous substrate structure with hierarchical pores.

As shown in FIG. 4, in some embodiments, the heating element 23 may be a porous heating film, which may be covered on the first surface of the porous body 21 in communication with the vaporization cavity 11 by means of heating film screen printing, vacuum coating, and the like, that is, the surface of the liquid locking advantage layer 2123, and partially infiltrates into the liquid locking advantage layer 2123.

In some embodiments, according to the test data, when the infiltration ratio of the heating film is higher than 60%, it is easy to encounter a serious e-liquid explosion phenomenon, and when the infiltration ratio is lower than 60%, the e-liquid explosion problem can be significantly alleviated. The following table lists the comparison of the e-liquid explosion test of different types of vaporization cores 20, which also illustrates this point.

| Sample name | Film thickness (exposed part) | Infiltration ratio (accounting for the entire thickness of the heating film) | Vaporization performance |
|---|---|---|---|
| | (Unit: µm) | | |
| AT02 | 22 | 85% | Severe e-liquid explosion |
| T65-1# | 116 | 42% | Slight e-liquid explosion |
| T65-2# | 102 | 45% | Slight e-liquid explosion |

For the heating element 23 laid on the small porosity layer (the liquid locking advantage layer 2123), because the pore size of the small porosity layer (the liquid locking advantage layer 2123) is smaller, the amount of infiltration of the heating element 23 is fewer. The heating element 23 mainly infiltrates into the small porosity layer (the liquid locking advantage layer 2123), and the infiltration ratio is lower than 60%, which may avoid a severe e-liquid explosion phenomenon. In addition, the heating element 23 is a porous heating film, which provides a channel for the vaporization air flow, reduces the operating temperature of the heating element 23, further reduces the generation of e-liquid explosion, and improves the reliability of the product.

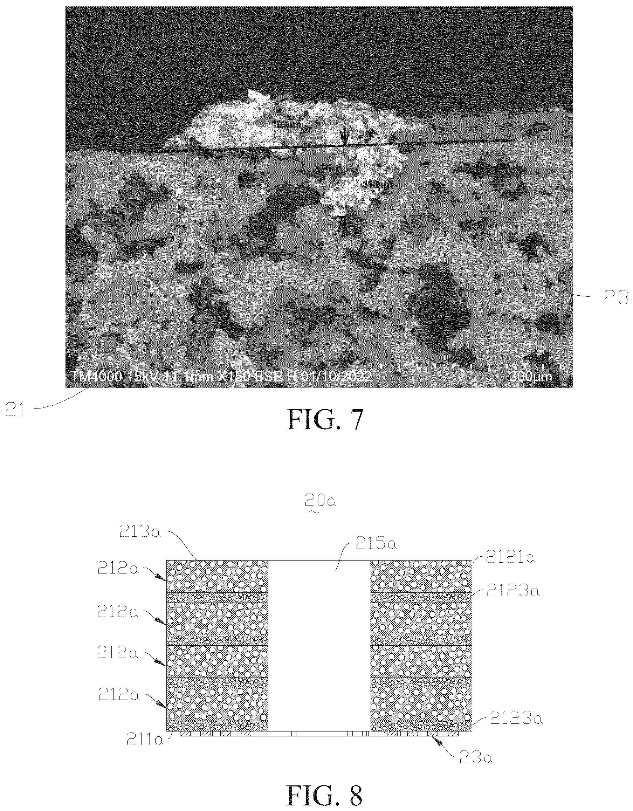

FIG. 7 shows an electron microscope diagram of a vaporization core 20 according to some embodiments of the present invention. As shown in the figure, the thickness of the part of the heating element 23 infiltrating into the porous body 21 is about 118 µm, and the thickness of an exposed part is about 103 µm. The infiltration ratio thereof is about 46.6%, which is less than 60%.

In some embodiments, the molding of the heating element 23 on the porous body 21 may adopt the following methods:
(1) The porous heating film is prepared by screen printing. The heating film slurry has a certain fluidity, and the slurry may infiltrate into the pores of the porous body 21 during printing. Because the pores of the porous body 21 are not straight through holes, there is a certain tortuosity, and hole walls are not smooth, which has resistance to slippery infiltration, the porous body 21 with a low porosity has a greater viscosity resistance of the hole walls and a lower infiltration degree of the heating film; and in addition, the infiltration amount may be regulated by adjusting the fluidity of the heating film material at a high temperature or the viscosity of the slurry at a low temperature. The thickness of the heating element 23 may range from 15 µm to 150 µm, and the thickness of the part of the heating element 23 that infiltrates into the porous body 21 does not exceed 60% of the thickness of the entire porous body 21. The control of the infiltration amount is mainly to reduce the overheating boiling of the e-liquid in the porous body 21, so as to reduce the heat loss and improve the vaporization efficiency.
(2) The porous heating film is prepared on the porous body 21 by a magnetron sputtering coating process. The thickness of the porous heating film may range from 1 µm to 5 µm, and the heating film material may form a small amount of infiltration in the pores of the porous body 21. Therefore, the infiltration part of the heating film generates less heat in the porous body 21, and the energy utilization rate is high; and a small amount of infiltration provides the physical fit between the heating film and the porous body 21, enhances the bonding force between a film and a base, and improves the reliability of the vaporization core 20.

FIG. 8 shows a vaporization core 20a according to some other embodiments of the present invention. The vaporization core 20a may serve as an alternative of the vaporization core 20, including a porous body 21a and a heating element 23a. The porous body 21a is configured to transmit the liquid aerosol-generation substrate in the liquid storage cavity 13 to the heating element 23a. The heating element 23a is arranged on the porous body 21a, and configured to generate a high temperature after being energized, to heat and vaporize the liquid aerosol-generation substrate.

In some embodiments, the porous body 21a may be in a shape of a column, which may include a first surface 211a, a second surface 213a, and a center channel 215a. The first surface 211a may be arranged on a bottom part of the porous body 21a and configured to install the heating element 23a, to form a vaporization surface. The second surface 213a and the first surface 211a are arranged opposite to each other, and the second surface may be arranged on a top end of the porous body 21a, and configured to be in contact with the liquid aerosol-generation substrate to form a liquid absorbing surface. The center channel 215a is provided in the porous body 21a and extends from the first surface 211a to the second surface 213a, to communicate the vaporization cavity 11 with the air outlet channel 15. It may be understood that, the porous body 21a is not limited to the shape of a column, but may also be in a shape of a flat plate.

In some embodiments, the porous body 21a may include n (2≤n≤30) unit layers 212a, and these unit layers 212a are stacked along the direction from the first surface 211a to the second surface 213a. Each unit layer 212a may include a liquid storage advantage layer 2121a away from the first surface 211a and a liquid locking advantage layer 2123a close to the first surface 211a, so that the liquid storage advantage layer 2121a and the liquid locking advantage layer 2123a of the porous body 21a are alternately arranged, to realize a steeper gradient drop than that of a porous body of the same thickness with a single porosity, so as to provide a stronger heat and mass transfer driving force and provide a faster liquid supplying capability for inhalation.

In some embodiments, the thickness of the porous body 21a (a distance from the first surface 211a to the second surface 213a) may range from 0.8 mm to 3.0 mm, and the average porosity thereof may range from 50% to 75%. The thickness of each unit layer 212a may range from 0.10 mm to 1.5 mm, and the thickness of the liquid locking advantage layer 2123a of each unit layer 212a may range from 10 µm to 200 µm.

In some embodiments, the liquid storage advantage layer 2121a may be a large-pore-size structure layer, and the liquid locking advantage layer 2123a may be a small-pore-size structure layer, where the liquid locking advantage layer 2123a provides the porous body 21a with a stronger support and liquid locking function than the liquid storage advantage layer 2121a; and the liquid storage advantage layer 2121a provides the porous body 21a with functions such us a larger amount of liquid storage, faster liquid supplying, and stronger heat insulation than the liquid locking advantage layer 2123a, so as to reduce heat loss and provide a higher energy utilization rate for the vaporization core 20a.

In some embodiments, the average pore size of the liquid storage advantage layer 2121a is 1.5 to 2.5 times of the average pore size of the liquid locking advantage layer 2123a. In some embodiments, the average pore size of the liquid storage advantage layer 2121a may range from 50 µm to 150 µm, and the average pore size of the liquid locking advantage layer 2123a may range from 20 µm to 100 µm.

In some embodiments, the porous body 21 may be porous alumina ceramic, porous silicon oxide, porous cordierite, porous silicon carbide, porous silicon nitride, porous mullite, or composite porous ceramic formed integrally. It may be understood that the porous body 21 is not limited thereto, and may also be made of other materials suitable for flow casting or coating.

In some embodiments, the porous body 21a may be formed by flow casting or extrusion, and specific examples are as follows:
(1) Flow casting process, the flow casting process itself is suitable for preparing a multilayer structure, and for example: (A) green compacts with different pore sizes may be flow cast first, and then a periodic layered structure may be prepared by periodically stacking and then co-firing the green compacts; and (B) it is also possible to prepare the periodic layered structure by adjusting a recipe by flowing green compacts with different pore sizes on different sides at once according to the difference in density and particle size of each component in the recipe, thus showing the difference in suspension capabilities in the slurry, and then stacking and co-firing the multilayered green compacts.
(2) Using extrusion molding process, a variety of green compacts with different pore sizes are extruded by recipe adjustment, and then multilayered green compacts were stacked and co-fired to form the periodic layered structure.
(3) Preparing by combination of a variety of processes, for example, a green compact with a pore size is flow casted first, then a green compact with another pore size is extruded or injection molded, and then a variety of green compacts with different pore sizes are stacked and co-fired periodically to prepare the periodic layered structure.
(4) Using a coating process, an underlying substrate is a large-pore-size structure layer, followed by coating performed on the substrate and secondary sintering to form a small-pore-size structure layer. According to different pore size requirements, the formulation and molding parameters of the porous body material may be adjusted artificially to form a required porous body structure with hierarchical pore sizes.

In some embodiments, the heating element 23a is at least partially exposed to a lowest end of the porous body 21a and the surface of the liquid locking advantage layer 2123a in communication with the vaporization cavity 11 in an air guiding manner, and the structure and molding method of the heating element 23a may be the same as those of the heating element 23, which are not described herein again.

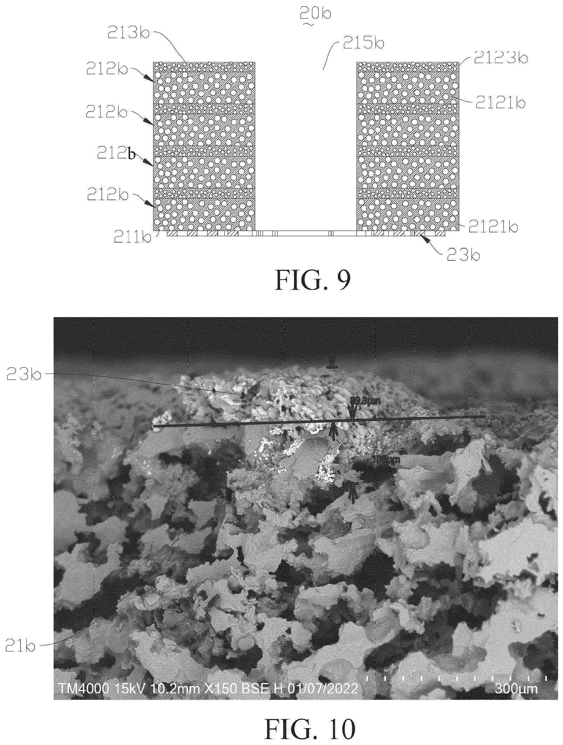

FIG. 9 shows a vaporization core 20b according to an example that is not covered by the claims. The vaporization core 20b may serve as an alternative of the vaporization core 20, including a porous body 21b and a heating element 23b. The porous body 21b is configured to transmit the liquid aerosol-generation substrate in the liquid storage cavity 13 to the heating element 23b. The heating element 23b is arranged on the porous body 21b, and configured to generate a high temperature after being energized, to heat and vaporize the liquid aerosol-generation substrate.

In some embodiments, the porous body 21b may be in a shape of a column, which may include a first surface 211b, a second surface 213b, and a center channel 215b. The first surface 211b is arranged on a bottom part of the porous body 21b and configured to install the heating element 23b, to form a vaporization surface. The second surface 213b and the first surface 211b are arranged opposite to each other on the top end of the porous body 21b, and the second surface is configured to be in contact with the liquid aerosol-generation substrate to form a liquid absorbing surface. The center channel 215b is arranged in the porous body 21b and extends from the first surface 211b to the second surface 213b, to communicate the vaporization cavity 11 with the air outlet channel 15. It may be understood that, the porous body 21b is not limited to the shape of a column, but may also be in a shape of a flat plate.

In some embodiments, the porous body 21b may be porous alumina ceramic, porous silicon oxide, porous cordierite, porous silicon carbide, porous silicon nitride, porous mullite, or composite porous ceramic formed integrally. However, the porous body is not limited thereto, and may also be other materials suitable for flow casting or coating. The thickness of the porous body 21b may range from 0.8 mm to 3.0 mm, and the average porosity thereof may range from 50% to 75%. In some embodiments, the porous body 21b may be a periodic layered structure, which may include n (2≤n≤30) unit layers 212b, where the thickness of each unit layer 212b may range from 0.1 mm to 1.5 mm, and each unit layer 212b may include a liquid storage advantage layer 2121b close to the first surface 211b and a liquid locking advantage layer 2123b away from the first surface 211b, which are configured to reduce a liquid supplying path, to provide a faster liquid supplying capability for inhalation. In some embodiments, the thickness of the liquid locking advantage layer 2123b may range from 10 µm to 200 µm.

In some embodiments, the liquid storage advantage layer 2121b may be a large-pore-size structure layer, and the liquid locking advantage layer 2123b may be a small-pore-size structure layer, where the liquid locking advantage layer 2123b provides the porous body 21b with a stronger support and liquid locking function than the liquid storage advantage layer 2121b; and the liquid storage advantage layer 2121b provides the porous body 21b with functions such us a larger amount of liquid storage, faster liquid supplying, and stronger heat insulation than the liquid locking advantage layer 2123b, so as to reduce heat loss and provide a higher energy utilization rate for the vaporization core 20b. In some embodiments, the average pore size of the liquid storage advantage layer 2121b is 1.5 to 2.5 times of the average pore size of the liquid locking advantage layer 2123b.

In some embodiments, under the condition of the same thickness, a gradient drop of a porous body with a uniform pore size is flat, and a porous body 21b of a periodic n-layered (n is more than or equal to 2) structure can realize a steeper gradient drop, to provide a stronger heat and mass transfer driving force.

As shown in FIG. 9, in some embodiments, the heating element 23b may be a porous heating film, which may be covered on the surface of the liquid storage advantage layer 2121b of the unit layer 212b close to the first surface 211b by means of heating film screen printing, vacuum coating, and the like, and partially infiltrate into the liquid storage advantage layer 2121b. For the heating element 23b laid on the liquid storage advantage layer 2121b, considering that the average pore size of the liquid storage advantage layer 2121b is larger, the liquid storage capability is strong, and the infiltration of the heating element 23b is easier. In order to ensure that the e-liquid is fully vaporized, and reduce the energy transmission of the heating element 23b to the part of e-liquid that cannot be vaporized, to reduce e-liquid explosion, the thickness of the liquid storage advantage layer 2121b may be limited from 0.1 mm to 1.70 mm, so that the heating element 23b realizes high vaporization efficiency. The structure and molding method of the heating element 23b may be the same as those of the heating element 23, and details are not described herein again.

FIG. 10 shows an electron microscope diagram of a vaporization core 20b according to some embodiments. As shown in the figure, the maximum depth of the part of the heating element 23b infiltrating into the porous body 21 is about 105 µm, and the thickness of an exposed part is about 89.3 µm. The infiltration ratio thereof is about 54%, which is less than 60%.

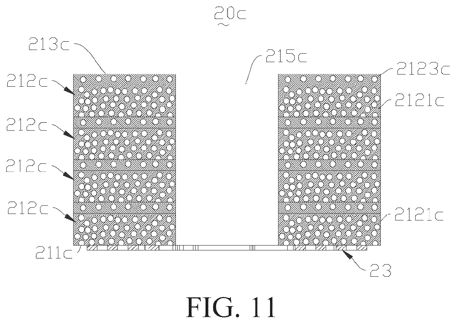

FIG. 11 shows a vaporization core 20c according to yet some other example that is not covered by the claims. The vaporization core 20c may serve as an alternative of the vaporization core 20, including a porous body 21c and a heating element 23c. The porous body 21c is configured to transmit the liquid aerosol-generation substrate in the liquid storage cavity 13 to the heating element 23c. The heating element 23c is arranged on the porous body 21c, and configured to generate a high temperature after being energized, to heat and vaporize the liquid aerosol-generation substrate.

In some embodiments, the porous body 21c may be in a shape of a column, which may include a first surface 211c, a second surface 213c, and a center channel 215c. The first surface 211c is arranged on a bottom part of the porous body 21c and configured to install the heating element 23c, to form a vaporization surface. The second surface 213c and the first surface 211c are arranged opposite to each other on the top end of the porous body 21c, and the second surface is configured to be in contact with the liquid aerosol-generation substrate to form a liquid absorbing surface. The center channel 215c is arranged in the porous body 21c and extends from the first surface 211c to the second surface 213c, to communicate the vaporization cavity 11 with the air outlet channel 15. It may be understood that, the porous body 21c is not limited to the shape of a column, but may also be in a shape of a flat plate.

In some embodiments, the porous body 21c may be porous alumina ceramic, porous silicon oxide, porous cordierite, porous silicon carbide, porous silicon nitride, porous mullite, or composite porous ceramic formed integrally. However, the porous body not limited thereto, and may also be other materials suitable for flow casting or coating. The thickness of the porous body 21c may range from 0.8 mm to 3.0 mm, and the average porosity thereof may range from 50% to 75%. In some embodiments, the porous body 21c may be a periodic layered structure, which may include n (2≤n≤30) unit layers 212c, where the thickness of each unit layer 212c may range from 0.10 mm to 1.5 mm, and each unit layer 212c may include a liquid storage advantage layer 2121 c close to the first surface 211c and a liquid locking advantage layer 2123c away from the first surface 211c, which are configured to reduce a liquid supplying path, to provide a faster liquid supplying capability for inhalation. In some embodiments, the thickness of the liquid locking advantage layer 2123 may range from 10 µm to 200 µm.

In some embodiments, the liquid storage advantage layer 2121c may be a high porosity layer, and the liquid locking advantage layer 2123c may be a low porosity layer, where the liquid locking advantage layer 2123c provides the porous body 21c with a stronger support and liquid locking function than the liquid storage advantage layer 2121c; and the liquid storage advantage layer 2121c provides the porous body 21c with functions such us a larger amount of liquid storage, faster liquid supplying, and stronger heat insulation than the liquid locking advantage layer 2123c, so as to reduce heat loss and provide a higher energy utilization rate for the vaporization core 20c. In some embodiments, the porosity of the liquid storage advantage layer 2121c is 1.2 to 2 times of the porosity of the liquid locking advantage layer 2123c. Specifically, the porosity of the liquid storage advantage layer 2121c may range from 55% to 90%, and the porosity of the liquid locking advantage layer 2123c may range from 45% to 70%. In some embodiments, under the condition of the same thickness, a gradient drop of a porous body with a uniform porosity is flat, and a porous body of a periodic n-layered (n is greater than or equal to 2) structure can realize a steeper gradient drop, to provide a stronger heat and mass transfer driving force.

As shown in FIG. 11, in some embodiments, the heating element 23c may be a porous heating film, which may be covered on the surface of the liquid storage advantage layer 2121c of the unit layer 212c close to the first surface 211c by means of heating film screen printing, vacuum coating, and the like, and partially infiltrate into the liquid storage advantage layer 2121c. For the heating element 23c laid on the liquid storage advantage layer 2121c, considering that the porosity of the liquid storage advantage layer 2121c is higher, the liquid storage capability is strong, and the infiltration of the heating element 23c is easier. In order to ensure that the e-liquid is fully vaporized, and reduce the energy transmission of the heating element 23c to the part of e-liquid that cannot be vaporized, to reduce e-liquid explosion, the thickness of the liquid storage advantage layer 2121c may be limited from 0.1 mm to 1.70 mm, so that the heating element 23c realizes high vaporization efficiency. The structure and molding method of the heating element 23c may be the same as those of the heating element 23, and details are not described herein again.

It should be noted that, although the heating element in the above embodiments is formed by a porous heating film, in some other embodiments, the heating element is not limited thereto, and other heating bodies such as a metal heating sheet or a non-porous heating film are also applicable.

## Claims

1. A vaporization core (20, 20a, 20b, 20c) for an electronic vaporization device (1), comprising:
a porous body (21, 21a, 21b, 21c); and
a heating film arranged on a surface of the porous body (21, 21a, 21b, 21c),
wherein the porous body (21, 21a, 21b, 21c) comprises at least two unit layers (212, 212a, 212b, 212c),
wherein the at least two unit layers (212, 212a, 212b, 212c) comprise a liquid storage advantage layer (2121, 2121a, 2121b, 2121c) and a liquid locking advantage layer (2123, 2123a, 2123b, 2123c) combined with the liquid storage advantage layer (2121, 2121a, 2121b, 2121c);
wherein the liquid storage advantage layer (2123, 2123a, 2123b, 2123c) has a porosity that is higher than a porosity of the liquid locking advantage layer (2121, 2121a, 2121b, 2121c) and/or the liquid storage advantage layer (2123, 2123a, 2123b, 2123c) has a pore size that is larger than a pore size of the liquid locking advantage layer (2121, 2121a, 2121b, 2121c);
wherein the porous body (21, 21a, 21b, 21c) comprises a first surface (211, 211a, 211b, 211c) and a second surface (213, 213a,213b, 213c) opposite the first surface (211, 211a, 211b, 211c);
wherein the liquid storage advantage layers (2121, 2121a, 2121b, 2121c) and the liquid locking advantage layers (2123, 2123a, 2123b, 2123c) of the at least two unit layers (212, 212a, 212b, 212c) are alternately stacked together along the direction from the first surface (211, 211a, 211b, 211c) to the second surface (213, 213a, 213b, 213c); and
wherein the heating film is combined with a surface of the liquid locking advantage layer (2123, 2123a, 2123b, 2123c), and at least partially infiltrates in the liquid locking advantage layer (2123, 2123a, 2123b, 2123c).

2. The vaporization core (20, 20a, 20b, 20c) of claim 1,
wherein the at least two unit layers (212, 212a, 212b, 212c) are arranged sequentially along the direction from the first surface (211, 211a, 211b, 211c) to the second surface (213, 213a, 213b, 213c),
wherein one unit layer (212, 212a, 212b, 212c) of the at least two unit layers (212, 212a, 212b, 212c) comprises at least the liquid locking advantage layer (2123, 2123a, 2123b, 2123c), and each other unit layer (212, 212a, 212b, 212c) of the at least two unit layers (212, 212a, 212b, 212c) comprises the liquid storage advantage layer (2121, 2121a, 2121b, 2121c) and the liquid locking advantage layer (2123, 2123a, 2123b, 2123c) combined with the liquid storage advantage layer (2121, 2121a, 2121b, 2121c), and
wherein the heating film is combined with a surface of the outermost liquid locking advantage layer (2123, 2123a, 2123b, 2123c) of the at least two unit layers (212, 212a, 212b, 212c).

3. The vaporization core (20, 20a, 20b, 20c) of claim 2, wherein each unit layer (212, 212a, 212b, 212c) of the at least two unit layers (212, 212a, 212b, 212c) comprises the liquid storage advantage layer (2121, 2121a, 2121b, 2121c) and the liquid locking advantage layer (2123, 2123a, 2123b, 2123c) stacked together with the liquid storage advantage layer (2121, 2121a, 2121b, 2121c).

4. The vaporization core (20, 20a, 20b, 20c) of claim 1, wherein the thickness of the liquid locking advantage layer (2123, 2123a, 2123b, 2123c) ranges from 10 µm to 200 µm.

5. The vaporization core (20, 20a, 20b, 20c) of claim 1, wherein the thickness of the porous body (21, 21a, 21b, 21c) ranges from 0.8 mm to 3.0 mm.

6. The vaporization core (20, 20a, 20b, 20c) of claim 1, wherein the average porosity of the porous body (21, 21a, 21b, 21c) ranges from 50% to 75%.

7. The vaporization core (20, 20a, 20b, 20c) of claim 1, wherein the thickness of each unit layer (212, 212a, 212b, 212c) ranges from 0.1 mm to 1.5 mm.

8. The vaporization core (20, 20a, 20b, 20c) of claim 1, wherein the liquid storage advantage layer (2121, 2121a, 2121b, 2121c) comprises a large-pore-size structure layer,
wherein the liquid locking advantage layer (2123, 2123a, 2123b, 2123c) comprises a small-pore-size structure layer, and
wherein the average pore size of the large-pore-size structure layer is 1.5 to 2.5 times of the average pore size of the small-pore-size structure layer.

9. The vaporization core (20, 20a, 20b, 20c) of claim 1, wherein the liquid storage advantage layer (2121, 2121a, 2121b, 2121c) comprises a large-pore-size structure layer,
wherein the liquid locking advantage layer (2123, 2123a, 2123b, 2123c) comprises a small-pore-size structure layer,
wherein the average pore size of the large-pore-size structure layer ranges from 50 µm to 150 µm, and
wherein the average pore size of the small-pore-size structure layer ranges from 20 µm to 100 µm.

10. The vaporization core (20, 20a, 20b, 20c) of claim 1, wherein the liquid storage advantage layer (2121, 2121a, 2121b, 2121c) comprises a high porosity layer,
wherein the liquid locking advantage layer (2123, 2123a, 2123b, 2123c) comprises a low porosity layer, and
wherein the porosity of the high porosity layer is 1.2 to 2 times of the porosity of the low porosity layer.

11. The vaporization core (20, 20a, 20b, 20c) of claim 1, wherein the liquid storage advantage layer (2121, 2121a, 2121b, 2121c) comprises a high porosity layer,
wherein the liquid locking advantage layer (2123, 2123a, 2123b, 2123c) comprises a low porosity layer,
wherein the porosity of the high porosity layer ranges from 55% to 90%, and
wherein the porosity of the low porosity layer ranges from 45% to 70%.

12. The vaporization core (20, 20a, 20b, 20c) of claim 1, wherein the porous body (21, 21a, 21b, 21c) comprises porous alumina ceramic, porous silicon oxide, porous cordierite, porous silicon carbide, porous silicon nitride, porous mullite, or composite porous ceramic formed integrally.

13. The vaporization core (20, 20a, 20b, 20c) of claim 1, wherein the thickness of the heating film ranges from 15 µm to 150 µm or from 1 µm to 5 µm.

14. The vaporization core (20, 20a, 20b, 20c) of claim 1, wherein the infiltration ratio of the heating film is less than 60%.

15. An electronic vaporization device (1), comprising:
the vaporization core (20, 20a, 20b, 20c) of any one of claims 1 to 14.

## Patentansprüche

1. Verdampfungskern (20, 20a, 20b, 20c) für eine elektronische Verdampfungsvorrichtung (1), umfassend:
einen porösen Körper (21, 21a, 21b, 21c); und
eine Heizfolie, die auf einer Oberfläche des porösen Körpers (21, 21a, 21b, 21c) angeordnet ist,
wobei der poröse Körper (21, 21a, 21b, 21c) mindestens zwei Einheitsschichten (212, 212a, 212b, 212c) umfasst,
wobei die mindestens zwei Einheitsschichten (212, 212a, 212b, 212c) eine Flüssigkeitsspeicher-Nutzschicht (2121, 2121a, 2121b, 2121c) und eine mit der Flüssigkeitsspeicher-Nutzschicht (2121, 2121a, 2121b, 2121c) kombinierte Flüssigkeitssperr-Nutzschicht (2123, 2123a, 2123b, 2123c) umfassen;
wobei die Flüssigkeitsspeicher-Nutzschicht (2123, 2123a, 2123b, 2123c) eine Porosität aufweist, welche höher ist als eine Porosität der Flüssigkeitssperr-Nutzschicht (2121, 2121a, 2121b, 2121c), und/oder die Flüssigkeitsspeicher-Nutzschicht (2123, 2123a, 2123b, 2123c) eine Porengröße aufweist, welche größer ist als eine Porengröße der Flüssigkeitssperr-Nutzschicht (2121, 2121a, 2121b, 2121c);
wobei der poröse Körper (21, 21a, 21b, 21c) eine erste Oberfläche (211, 211a, 211b, 211c) und eine zweite Oberfläche (213, 213a, 213b, 213c) gegenüber der ersten Oberfläche (211, 211a, 211b, 211c) umfasst;
wobei die Flüssigkeitsspeicher-Nutzschichten (2121, 2121a, 2121b, 2121c) und die Flüssigkeitssperr-Nutzschichten (2123, 2123a, 2123b, 2123c) der mindestens zwei Einheitsschichten (212, 212a, 212b, 212c) abwechselnd entlang der Richtung von der ersten Oberfläche (211, 211a, 211b, 211c) zu der zweiten Oberfläche (213, 213a, 213b, 213c) gestapelt sind; und
wobei die Heizfolie mit einer Oberfläche der Flüssigkeitssperr-Nutzschicht (2123, 2123a, 2123b, 2123c) kombiniert ist und mindestens teilweise in die Flüssigkeitssperr-Nutzschicht (2123, 2123a, 2123b, 2123c) eindringt.

2. Verdampfungskern (20, 20a, 20b, 20c) nach Anspruch 1,
wobei die mindestens zwei Einheitsschichten (212, 212a, 212b, 212c) nacheinander entlang der Richtung von der ersten Oberfläche (211, 211a, 211b, 211c) zu der zweiten Oberfläche (213, 213a, 213b, 213c) angeordnet sind,
wobei eine Einheitsschicht (212, 212a, 212b, 212c) der mindestens zwei Einheitsschichten (212, 212a, 212b, 212c) mindestens die Flüssigkeitssperr-Nutzschicht (2123, 2123a, 2123b, 2123c) umfasst und jede andere Einheitsschicht (212, 212a, 212b, 212c) der mindestens zwei Einheitsschichten (212, 212a, 212b, 212c) die Flüssigkeitsspeicher-Nutzschicht (2121, 2121a, 2121b, 2121c) und die mit der Flüssigkeitsspeicher-Nutzschicht (2121, 2121a, 2121b, 2121c) kombinierte Flüssigkeitssperr-Nutzschicht (2123, 2123a, 2123b, 2123c) umfasst und
wobei die Heizfolie mit einer Oberfläche der äußersten Flüssigkeitssperr-Nutzschicht (2123, 2123a, 2123b, 2123c) der mindestens zwei Einheitsschichten (212, 212a, 212b, 212c) kombiniert ist.

3. Verdampfungskern (20, 20a, 20b, 20c) nach Anspruch 2, wobei jede Einheitsschicht (212, 212a, 212b, 212c) der mindestens zwei Einheitsschichten (212, 212a, 212b, 212c) die Flüssigkeitsspeicher-Nutzschicht (2121, 2121a, 2121b, 2121c) und die mit der Flüssigkeitsspeicher-Nutzschicht (2121, 2121a, 2121b, 2121c) gestapelte Flüssigkeitssperr-Nutzschicht (2123, 2123a, 2123b, 2123c) umfasst.

4. Verdampfungskern (20, 20a, 20b, 20c) nach Anspruch 1, wobei die Dicke der Flüssigkeitssperr-Nutzschicht (2123, 2123a, 2123b, 2123c) in einem Bereich von 10 µm bis 200 µm liegt.

5. Verdampfungskern (20, 20a, 20b, 20c) nach Anspruch 1, wobei die Dicke des porösen Körpers (21, 21a, 21b, 21c) in einem Bereich von 0,8 mm bis 3,0 mm liegt.

6. Verdampfungskern (20, 20a, 20b, 20c) nach Anspruch 1, wobei die durchschnittliche Porosität des porösen Körpers (21, 21a, 21b, 21c) in einem Bereich von 50 % bis 75 % liegt.

7. Verdampfungskern (20, 20a, 20b, 20c) nach Anspruch 1, wobei die Dicke jeder Einheitsschicht (212, 212a, 212b, 212c) in einem Bereich von 0,1 mm bis 1,5 mm liegt.

8. Verdampfungskern (20, 20a, 20b, 20c) nach Anspruch 1, wobei die Flüssigkeitsspeicher-Nutzschicht (2121, 2121a, 2121b, 2121c) ein Schicht mit großer Porengröße umfasst,
wobei die Flüssigkeitssperr-Nutzschicht (2123, 2123a, 2123b, 2123c) eine Schicht mit kleiner Porengröße umfasst und
wobei die durchschnittliche Porengröße der Schicht mit großer Porengröße das 1,5- bis 2,5-fache der durchschnittlichen Porengröße der Schicht mit kleiner Porengröße beträgt.

9. Verdampfungskern (20, 20a, 20b, 20c) nach Anspruch 1, wobei die Flüssigkeitsspeicher-Nutzschicht (2121, 2121a, 2121b, 2121c) ein Schicht mit großer Porengröße umfasst,
wobei die Flüssigkeitssperr-Nutzschicht (2123, 2123a, 2123b, 2123c) eine Schicht mit kleiner Porengröße umfasst,
wobei die durchschnittliche Porengröße der Schicht mit großer Porengröße in einem Bereich von 50 µm bis 150 µm liegt und
wobei die durchschnittliche Porengröße der Schicht mit kleiner Porengröße in einem Bereich von 20 µm bis 100 µm liegt.

10. Verdampfungskern (20, 20a, 20b, 20c) nach Anspruch 1, wobei die Flüssigkeitsspeicher-Nutzschicht (2121, 2121a, 2121b, 2121c) ein Schicht mit hoher Porosität umfasst,
wobei die Flüssigkeitssperr-Nutzschicht (2123, 2123a, 2123b, 2123c) eine Schicht mit geringer Porosität umfasst und
wobei die Porosität der Schicht mit hoher Porosität das 1,2- bis 2-fache der Porosität der Schicht mit geringer Porosität beträgt.

11. Verdampfungskern (20, 20a, 20b, 20c) nach Anspruch 1, wobei die Flüssigkeitsspeicher-Nutzschicht (2121, 2121a, 2121b, 2121c) ein Schicht mit hoher Porosität umfasst,
wobei die Flüssigkeitssperr-Nutzschicht (2123, 2123a, 2123b, 2123c) eine Schicht mit geringer Porosität umfasst,
wobei die Porosität der Schicht mit hoher Porosität in einem Bereich von 55 % bis 90 % liegt und
wobei die Porosität der Schicht mit geringer Porosität in einem Bereich von 45 % bis 70 % liegt.

12. Verdampfungskern (20, 20a, 20b, 20c) nach Anspruch 1, wobei der poröse Körper (21, 21a, 21b, 21c) poröse Aluminiumoxidkeramik, poröses Siliziumoxid, poröses Cordierit, poröses Siliziumkarbid, poröses Siliziumnitrid, poröses Mullit oder einstückig ausgebildete poröse Verbundkeramik umfasst.

13. Verdampfungskern (20, 20a, 20b, 20c) nach Anspruch 1, wobei die Dicke der Heizfolie in einem Bereich von 15 µm bis 150 µm oder von 1 µm bis 5 µm liegt.

14. Verdampfungskern (20, 20a, 20b, 20c) nach Anspruch 1, wobei der Infiltrationsgrad der Heizfolie weniger als 60 % beträgt.

15. Elektronische Verdampfungsvorrichtung (1), umfassend:
den Verdampfungskern (20, 20a, 20b, 20c) nach einem der Ansprüche 1 bis 14.

## Revendications

1. Noyau de vaporisation (20, 20a, 20b, 20c) pour un dispositif de vaporisation électronique (1), comprenant :
un corps poreux (21, 21a, 21b, 21c) ; et
un film chauffant disposé sur une surface du corps poreux (21, 21a, 21b, 21c),
dans lequel le corps poreux (21, 21a, 21b, 21c) comprend au moins deux couches unitaires (212, 212a, 212b, 212c),
dans lequel les au moins deux couches unitaires (212, 212a, 212b, 212c) comprennent une couche avantageuse de stockage de liquide (2121, 2121a, 2121b, 2121c) et une couche avantageuse de rétention de liquide (2123, 2123a, 2123b, 2123c) combinée avec la couche avantageuse de stockage de liquide (2121, 2121a, 2121b, 2121c) ;
dans lequel la couche avantageuse de stockage de liquide (2123, 2123a, 2123b, 2123c) a une porosité plus élevée que la porosité de la couche avantageuse de rétention de liquide (2121, 2121a, 2121b, 2121c) et/ou la couche avantageuse de stockage de liquide (2123, 2123a, 2123b, 2123c) a une taille de pore plus grande que la taille de pore de la couche avantageuse de rétention de liquide (2121, 2121a, 2121b, 2121c) ;
dans lequel le corps poreux (21, 21a, 21b, 21c) comprend une première surface (211, 211a, 211b, 211c) et une seconde surface (213, 213a, 213b, 213c) opposée à la première surface (211, 211a, 211b, 211c) ;
dans lequel les couches avantageuses de stockage de liquide (2121, 2121a, 2121b, 2121c) et les couches avantageuses de rétention de liquide (2123, 2123a, 2123b, 2123c) des au moins deux couches unitaires (212, 212a, 212b, 212c) sont empilées alternativement ensemble le long de la direction de la première surface (211, 211a, 211b, 211c) à la seconde surface (213, 213a, 213b, 213c) ; et
dans lequel le film chauffant est combiné avec une surface de la couche avantageuse de rétention de liquide (2123, 2123a, 2123b, 2123c), et s'infiltre au moins partiellement dans la couche avantageuse de rétention de liquide (2123, 2123a, 2123b, 2123c).

2. Noyau de vaporisation (20, 20a, 20b, 20c) selon la revendication 1,
dans lequel les au moins deux couches unitaires (212, 212a, 212b, 212c) sont disposées séquentiellement le long de la direction de la première surface (211, 211a, 211b, 211c) à la seconde surface (213, 213a, 213b, 213c),
dans lequel une couche unitaire (212, 212a, 212b, 212c) des au moins deux couches unitaires (212, 212a, 212b, 212c) comprend au moins la couche avantageuse de rétention de liquide (2123, 2123a, 2123b, 2123c), et chaque autre couche unitaire (212, 212a, 212b, 212c) des au moins deux couches unitaires (212, 212a, 212b, 212c) comprend la couche avantageuse de stockage de liquide (2121, 2121a, 2121b, 2121c) et la couche avantageuse de rétention de liquide (2123, 2123a, 2123b, 2123c) combinée à la couche avantageuse de stockage de liquide (2121, 2121a, 2121b, 2121c), et
dans lequel le film chauffant est combiné avec une surface de la couche avantageuse de rétention de liquide la plus externe (2123, 2123a, 2123b, 2123c) des au moins deux couches unitaires (212, 212a, 212b, 212c).

3. Noyau de vaporisation (20, 20a, 20b, 20c) selon la revendication 2, dans lequel chaque couche unitaire (212, 212a, 212b, 212c) des au moins deux couches unitaires (212, 212a, 212b, 212c) comprend la couche avantageuse de stockage de liquide (2121, 2121a, 2121b, 2121c) et la couche avantageuse de rétention de liquide (2123, 2123a, 2123b, 2123c) empilées avec la couche avantageuse de stockage de liquide (2121, 2121a, 2121b, 2121c).

4. Noyau de vaporisation (20, 20a, 20b, 20c) selon la revendication 1, dans lequel l'épaisseur de la couche avantageuse de rétention de liquide (2123, 2123a, 2123b, 2123c) varie de 10 µm à 200 µm.

5. Noyau de vaporisation (20, 20a, 20b, 20c) selon la revendication 1, dans lequel l'épaisseur du corps poreux (21, 21a, 21b, 21c) varie de 0,8 mm à 3,0 mm.

6. Noyau de vaporisation (20, 20a, 20b, 20c) selon la revendication 1, dans lequel la porosité moyenne du corps poreux (21, 21a, 21b, 21c) varie de 50 % à 75 %.

7. Noyau de vaporisation (20, 20a, 20b, 20c) selon la revendication 1, dans lequel l'épaisseur de chaque couche unitaire (212, 212a, 212b, 212c) varie de 0,1 mm à 1,5 mm.

8. Noyau de vaporisation (20, 20a, 20b, 20c) selon la revendication 1, dans lequel la couche avantageuse de stockage de liquide (2121, 2121a, 2121b, 2121c) comprend une couche à structure à pores de grande taille,
dans lequel la couche avantageuse de rétention de liquide (2123, 2123a, 2123b, 2123c) comprend une couche à structure à pores de petite taille, et
dans lequel la taille moyenne des pores de la couche à structure à pores de grande taille est de 1,5 à 2,5 fois la taille moyenne des pores de la couche à structure à pores de petite taille.

9. Noyau de vaporisation (20, 20a, 20b, 20c) selon la revendication 1, dans lequel la couche avantageuse de stockage de liquide (2121, 2121a, 2121b, 2121c) comprend une couche à structure à pores de grande taille,
dans lequel la couche avantageuse de rétention de liquide (2123, 2123a, 2123b, 2123c) comprend une couche à structure à pores de petite taille,
dans lequel la taille moyenne des pores de la couche à structure à pores de grande taille varie de 50 µm à 150 µm, et
dans lequel la taille moyenne des pores de la couche à structure à pores de petite taille varie de 20 µm à 100 µm.

10. Noyau de vaporisation (20, 20a, 20b, 20c) selon la revendication 1, dans lequel la couche avantageuse de stockage de liquide (2121, 2121a, 2121b, 2121c) comprend une couche à haute porosité,
dans lequel la couche avantageuse de rétention de liquide (2123, 2123a, 2123b, 2123c) comprend une couche à basse porosité, et
dans lequel la porosité de la couche à haute porosité est de 1,2 à 2 fois la porosité de la couche à basse porosité.

11. Noyau de vaporisation (20, 20a, 20b, 20c) selon la revendication 1, dans lequel la couche avantageuse de stockage de liquide (2121, 2121a, 2121b, 2121c) comprend une couche à haute porosité,
dans lequel la couche avantageuse de rétention de liquide (2123, 2123a, 2123b, 2123c) comprend une couche à basse porosité,
dans lequel la porosité de la couche à haute porosité varie de 55 % à 90 %, et
dans lequel la porosité de la couche à basse porosité varie de 45 % à 70 %.

12. Noyau de vaporisation (20, 20a, 20b, 20c) selon la revendication 1, dans lequel le corps poreux (21, 21a, 21b, 21c) comprend de la céramique d'alumine poreuse, de l'oxyde de silicium poreux, de la cordiérite poreuse, du carbure de silicium poreux, du nitrure de silicium poreux, de la mullite poreuse ou de la céramique poreuse composite formée intégralement.

13. Noyau de vaporisation (20, 20a, 20b, 20c) selon la revendication 1, dans lequel l'épaisseur du film chauffant varie de 15 µm à 150 µm ou de 1 µm à 5 µm.

14. Noyau de vaporisation (20, 20a, 20b, 20c) selon la revendication 1, dans lequel le taux d'infiltration du film chauffant est inférieur à 60 %.

15. Dispositif de vaporisation électronique (1), comprenant : le noyau de vaporisation (20, 20a, 20b, 20c) selon l'une quelconque des revendications 1 à 14.
